# EUROPEAN PATENT APPLICATION

(11) **EP 2 472 129 A1**
(43) Date of publication of application: **04.07.2012**
(21) Application number: 10811726.8
(22) Date of filing: 17.08.2010
(51) Int. Cl.: F16B 2/22, F16L 3/12

(54) **CLAMP**

(30) Priority: 25.08.2009 JP 2009194599
(71) Applicant: Nifco Inc., Kanagawa 244-8522 (JP)
(72) Inventor: SUDO, Hideki, Yokohama-shi Kanagawa 244-8522 (JP); TANIGUCHI, Katsuhiko, Yokohama-shi Kanagawa 244-8522 (JP)
(74) Representative: Gassner, Wolfgang
(86) International application number: PCT/JP2010/063885
(87) International publication number: WO 2011/024676

(57) **Abstract**

A convex part (58) is placed to protrude on a contact part (56B) constituting a bearing part (56). The pipe (16) therefore is pressed outward while elastically deforming the contact part (56B) side by way of the convex part (58). The pipe (16) is held inside by a leading end face (54A) of an elastic piece (54), a side face (52B) of an elastic piece (52), and the bearing part (56), but the pipe (16) is pressed toward the side of the elastic piece (52) (toward the direction of arrow A) by way of the convex part (58) by elastic energy (return force) accumulated by the elastic deformation of the contact part (56B).

## Description

### TECHNOLOGICAL FIELD

The present invention relates to a clamp used for installing an air conditioner pipe, or the like, on a body panel of an automobile.

### BACKGROUND TECHNOLOGY

A clamp for holding an air conditioner pipe, or the like, is fixed on a body panel of an automobile, and the pipe, or the like, is fixed in position by using the clamp. For example, in Patent Document 1, an elastic piece and a support piece are provided on a clamp part for holding a pipe, and the pipe is held between the elastic piece and the support piece. Also, the positions where the elastic piece and the support piece contact the pipe are changed to fit the diameter of the pipe, so that the pipe is held regardless of the diameter of the pipe.

### PRIOR ART DOCUMENTS

### PATENT DOCUMENTS

Patent Document 1: Japanese Unexamined Patent Publication No. 2002-5337
Patent Document 2: US Patent Publication No. 6899399B2

### OUTLINE OF THE INVENTION

### PROBLEMS TO BE SOLVED BY THE INVENTION

In consideration of the above circumstances, the present invention provides a clamp for suppressing the shifting of a pipe against a thrust force acting on the pipe.

### MEANS FOR SOLVING THE PROBLEMS

A first aspect of the present invention provides a clamp, comprising: a bearing part fixed on an installation-receiving member, to be contactable by a rod-form object; a pair of wall parts provided facing opposite each other on the bearing part, forming a hollow part in which the rod-form object can be inserted; a bearing part provided in an inner recess of the wall part, to be contactable by the rod-form object; an elastic piece extending from a leading end part of the wall part toward the bearing part, being elastically deformed to allow the rod-form body to advance into the hollow part, and holding the rod-form object in between with the bearing part; and at least one convex part protruding on the bearing part to contact the rod-form body.

In the abovementioned aspect, the bearing part is provided being fixed on the installation-receiving member, to be contactable by the rod-form object, and the pair of wall parts is provided facing opposite each other on the bearing part, forming the hollow part in which the rod-form object can be inserted. The elastic piece extends from the leading end part of the wall part toward the bearing part. The elastic piece is elastically deformed to allow the rod-form body to advance into the hollow part, and holds the rod-form object in between with the bearing part. Here, the convex part is placed protruding on the bearing part to contact the rod-form body.

Thus, by placing the convex part protruding on the bearing part, the rod-form object contacting the bearing part is pressed toward the side of the elastic piece by the convex part. By this, a holding force to hold the rod-form object between the bearing part and the elastic piece is increased, and shifting of the rod-form object against a thrust force acting on the rod-form object can be suppressed.

A second aspect of the present invention is such that, in the first aspect of the present invention, the convex part may be elastically deformable and may press the rod-form object in an elastically deformed state.

In the abovementioned configuration, by making the convex part elastically deformable and pressing the rod-form object in the elastically deformed state, the holding force to hold the rod-form object between the bearing part and the elastic piece can be further increased using the return force of the convex part. By this, shifting of the rod-form object against a thrust force acting on the rod-form object can be further suppressed.

A third aspect of the present invention is such that, in the first aspect of the present invention, the convex part is formed on the bearing part formed thinly by forming a hole part on an opposite side thereof with respect to the hollow part.

In the abovementioned configuration, the bearing part is made thinly by forming the hole part on the opposite side thereof with respect to the hollow part, so that the bearing part is more easily elastically deformed. Thus, by forming the convex part on the bearing part having been made more easily elastically deformed, about the same effect as the effect of the second aspect of the present invention can be obtained.

A fourth aspect of the present invention is such that, in the first aspect of the present invention, the convex part may be provided in a position opposite a leading end part of the elastic piece, having the hollow part in between.

Because the rod-form object is held between the bearing part and the elastic piece, in the abovementioned configuration, by providing the convex part in a position opposite the leading end part of the elastic piece, having the hollow part in between, the holding force to hold the rod-form object between the bearing part (convex part) and the elastic piece can be assuredly increased.

### EFFECT OF THE INVENTION

Because the present invention is configured as above, shifting of a rod-form object against a thrust force acting on the rod-form object can be suppressed.

### BRIEF DESCRIPTION OF THE DRAWINGS

FIG. 1 is a perspective view illustrating the clamp according to the present embodiment.
FIG. 2 is a front view illustrating the clamp according to the present embodiment.
FIG. 3 is an enlarged front view of the main parts of the clamp according to the present mode, illustrating a state in which a pipe is held in between with a bearing part provided without a convex part.
FIG. 4 is an enlarged front view of the main parts of the clamp according to the present embodiment, illustrating a state in which a pipe having a small outer diameter dimension is held in between with a bearing part provided with a convex part.
FIG. 5 is an enlarged front view of the main parts of the clamp according to the present embodiment, illustrating a state in which a pipe having a large outer diameter dimension is held in between with a bearing part provided with a convex part.

### EMBODIMENTS OF THE INVENTION

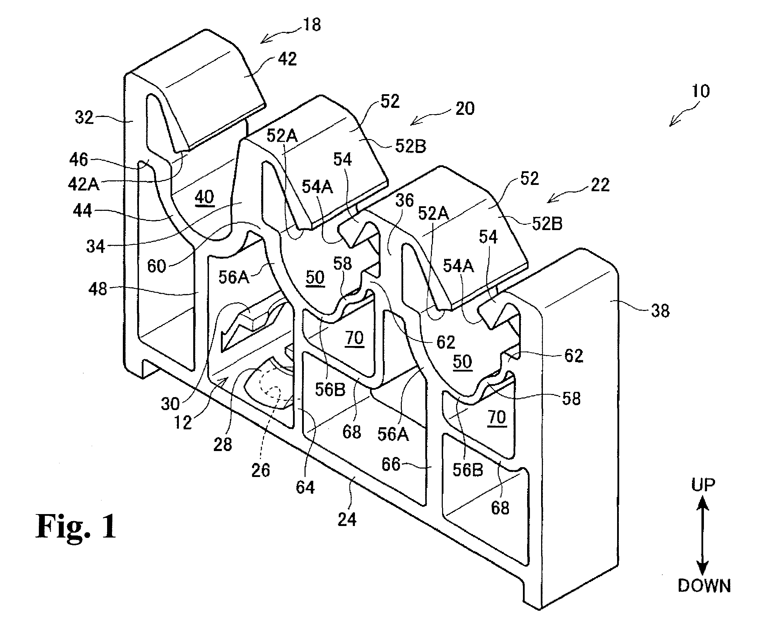

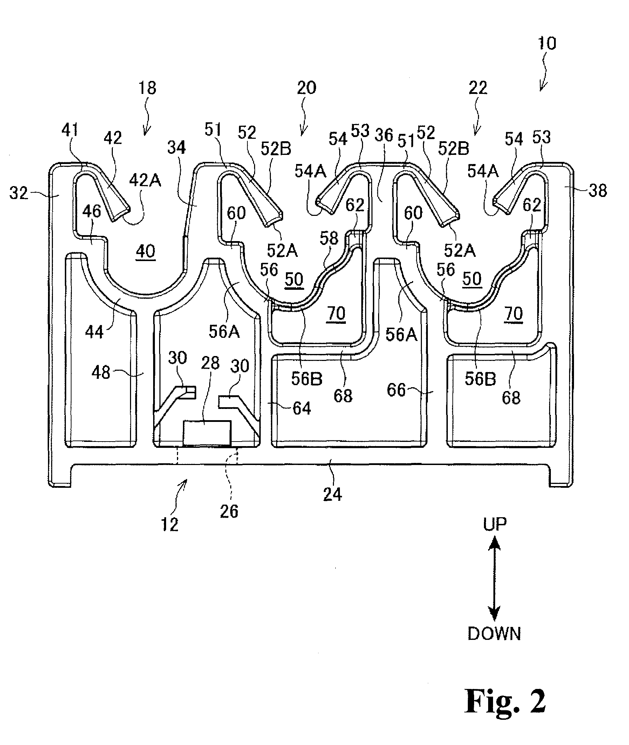

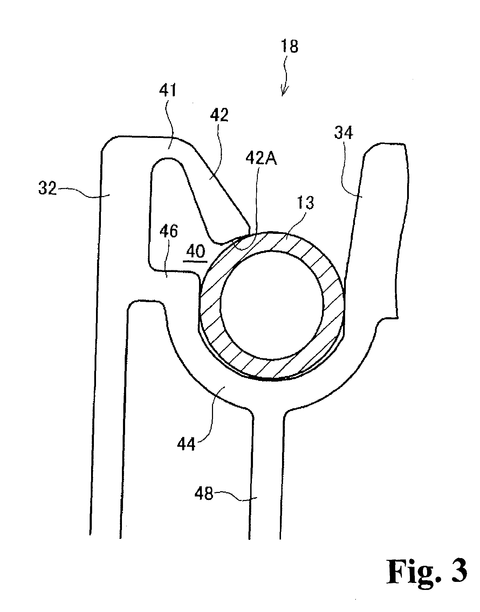

The clamp 10 according to the present embodiment is illustrated in FIGS. 1 and 2. This clamp 10 has a bolted part 12 bolted by a stud bolt projecting from a body panel (installation-receiving member) of an automobile not illustrated, and clamp parts 18, 20, and 22 for holding pipes (rod-form objects) 13, 14, and 16 (see FIGS. 3 to 5) for fuel, air conditioner, or the like.

The clamp part 18 is capable of holding the pipe 13, and the clamp parts 20 and 22 are capable of holding the pipe 14, which has about the same diameter as the pipe 13, or the pipe 16, which has a larger diameter than the pipe 14.

Here, for convenience of the description, the top and bottom (indicated by UP and DOWN) of the clamp 10 are set with reference to the direction illustrated in FIGS. 1 and 2, and the description is given accordingly.

The bolted part 12 is provided on a lower part of the clamp 10, and a round hole 26 through which the stud bolt can be inserted is provided on a lower wall 24 of the clamp 10. A pair of guide pieces 28 extends diagonally upward and inward from the periphery of the round hole 26, and a pair of restraining pieces 30 extends diagonally upward from mutually oppositely facing inner wall faces of reinforcing ribs 48 and 64 to be described, so as to intersect orthogonally with the guide pieces 28 above the guide pieces 28.

Leading end parts of the pair of restraining pieces 30 are horizontal, and their mutual heights are different. The distance of separation in the height direction of the restraining pieces 30 is matched to the pitch of the threads of the stud bolt. Therefore, the leading end parts of the restraining pieces 30 become capable of biting into the thread grooves of the inserted stud bolt, so that the clamp 10 does not come off easily.

Meanwhile, the clamp parts 18, 20, and 22 are provided on an upper part of the clamp 10, and adjacent clamp parts share wall parts. The clamp part 18 has wall parts 32 and 34, the clamp part 20 has wall parts 34 and 36, and the clamp part 22 has wall parts 36 and 38.

### The clamp part 18 is first described.

As illustrated in FIGS. 2 and 3, the wall part 32 and the wall part 34 of the clamp part 18 face opposite each other, and a hollow part 40 is provided between the wall part 32 and the wall part 34. The pipe is made insertable inside the hollow part 40. Also, an elastic piece 42 extends from a leading end part of the wall part 32 toward the hollow part 40 by way of a hinge part 41, and a curved surface contactable with the outer perimeter surface of the pipe 14 is formed on a leading end face 42A of the elastic piece 42.

When the pipe 13 passes through, the hinge part 41 of the elastic piece 42 is elastically deformed so that the elastic piece 42 is pushed wide toward the side of the wall part 32, and the advance of the pipe 13 into the hollow part 40 is allowed.

A bearing part 44 surface contactable (contact) with the outer perimeter surface of the pipe 13 is provided on an inner recess part of the hollow part 40. When the pipe 13 is inserted into the hollow part 40 and reaches the leading end face 42A of the elastic piece 42, the pipe 13 returns and the elastic piece 42 returns, and the leading end part 42A of the elastic piece 42 surface contacts (contacts) with the outer perimeter surface of the pipe 13. By this, the pipe 13 is held between the elastic piece 42 and the bearing part 44.

The bearing part 44 is formed basically with the same thickness, but a step part is formed on a base part 46 on the wall part 32 side of the bearing part 44, projecting roughly perpendicularly from an inner face of the wall part 32 and hanging down on the bearing part 44 in parallel with the wall part 32, and is formed thicker than the wall part 32 and the rest of the bearing part 44.

Because the pipe 13 is held between the bearing part 44 and the elastic piece 42, reinforcement of the bearing part 44 is devised by making the base part 46 thick. Also, a reinforcing rib 48 hangs down from the center of a lower face of the bearing part 44, extending in parallel with the wall part 32 up to the lower wall 24 of the clamp 10, so that the clamp part 18 is reinforced.

### The clamp parts 20 and 22 are next described.

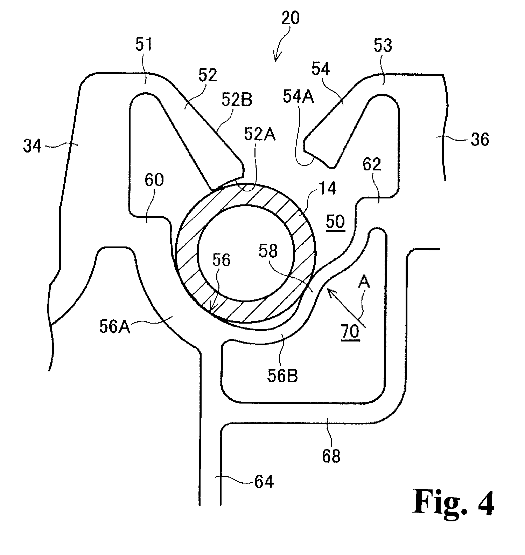

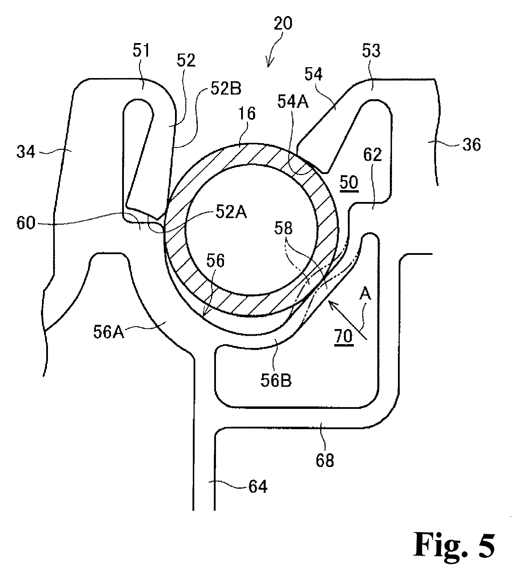

As illustrated in FIG. 2, the wall part 34 and the wall part 36 of the clamp part 20, as well as the wall part 36 and the wall part 38 of the clamp part 22, face opposite each other, and hollow parts 50 are provided respectively between the wall parts 34 and 36 and between the wall parts 36 and 38. The pipes 14 and 16 (see FIGS. 4 and 5) respectively are made insertable into the hollow parts 50. Because the clamp part 20 and the clamp part 22 are formed in about the same shape, the description of the clamp part 22 is omitted.

An elastic piece 52 extends from a leading end part of the wall part 34 of the clamp part 20 toward the hollow part 50 by way of a hinge part 51, and a curved surface contactable with the outer perimeter surface of the pipe 14 is formed on a leading end surface 52A of the elastic piece 52. Also, an elastic piece 54 extends from a leading end part of the wall part 36 toward the hollow part 50 by way of a hinge part 53, and a curved surface contactable with the outer perimeter surface of the pipe 16 is formed on a leading end face 54A of the elastic piece 54.

The elastic piece 52 is formed longer than the elastic piece 54, and the distance of separation between the leading end part of the elastic piece 52 and the leading end part 54 of the elastic piece 54 is narrower than the outer diameter dimension of the pipe 14. Therefore, when the pipes 14 and 16 pass through, the elastic pieces 52 and 54 are elastically deformed to be pushed wide, whereby the advance of the pipes 14 and 16 into the hollow parts 50 is allowed.

A bearing part 56 surface contactable (contact) with the outer perimeter surface of the pipe 14 or 16 is provided on an inner recess part of the hollow part 50. Because the length of the elastic piece 54 is shorter than that of the elastic piece 52, when the pipe 14 is inserted into the hollow part 50, the pipe 14 first passes the leading end face 54A of the elastic piece 54, and the elastic piece 54 returns. Also, when the pipe 14 reaches the leading end surface 52A of the elastic piece 52, the elastic piece 52 returns, and the leading end face 52A of the elastic piece 52 surface contacts the outer perimeter surface of the pipe 14. By this, the pipe 14 is held between the elastic piece 52 and the bearing part 56.

Meanwhile, when the pipe 16 is inserted into the hollow part 16 and reaches the leading end face 54A of the elastic piece 54, the elastic piece 54 returns, and the leading end face 54A of the elastic piece 54 contacts the outer perimeter surface of the pipe 16. By this, the pipe 16 is held between the elastic piece 54 and the bearing part 56. At this time, a side face 52B of the elastic piece 52 contacts the outer perimeter surface of the pipe 16 while the elastic piece 52 is in a state being elastically deformed.

Here, the bearing part 56 comprises a contact part 56A and a contact part 56B. The contact part 56A is formed with about the same thickness as the bearing part 44, and the contact part 56B is formed thinner than the contact part 56A and is made elastically deformable. Also, a convex part 58 is placed protruding on the contact part 56B in a position about facing opposite the leading end face 52A of the elastic piece 52 (preferably on the exit side of the hollow part 50), running along the depth direction of the contact part 56B, and is contacted by the outer perimeter surface of the pipe 14 or 16.

Also, step parts are formed respectively on a base part 60 on the side of the contact part 56A of the bearing part 56 and on a base part 62 on the side of the contact part 56B of the bearing part 56, in the same manner as on the base part 60 of the bearing part 44, so that reinforcement of the bearing part 56 is devised.

Also, a reinforcing rib 64 hangs down from the center of a lower face of the bearing part 56, extending up to the lower wall 24 of the clamp 10, so that the clamp part 20 is strengthened. Also, a hook-form reinforcing rib 68 is formed on the reinforcing rib 64, hanging down from the wall part 36 and being formed in parallel with the lower wall 24.

A space (hole part) 70 is provided on the outside of the contact part 56 to make the contact part 56B thinly and elastically deformable. Therefore, the reinforcing rib 68 is formed for the purpose of securing the space 70 on the outside of the contact part 56B and reinforcing the contact part 56B.

### (Operation of the clamp)

The operation of the clamp according to the present embodiment is next described.
As illustrated in FIG. 3, when the pipe 13 is inserted into the clamp part 18, the elastic piece 42 is elastically deformed and is pushed wide to the outside, and the pipe 13 becomes capable of advancing into the hollow part 40. When the pipe 13 is moved inside the hollow part 40 and the pipe 13 reaches the leading end face 42A of the elastic piece 42, the elastic piece 42 returns, the leading end face 42A of the elastic piece 42 contacts the outer perimeter surface of the pipe 13, the outer perimeter surface of the pipe 13 contacts the bearing part 44, and the pipe 13 is held between the elastic piece 42 and the bearing part 44.

Meanwhile, as illustrated in FIG. 4, when the pipe 14 is inserted into the clamp part 20 (same as the clamp part 22), the elastic pieces 52 and 54 respectively are deformed and are pushed wide, and the pipe 14 becomes capable of advancing into the hollow part 50. When the pipe 14 is moved inside the hollow part 50 and the pipe 14 passes the leading end face 54A of the elastic piece 54, the elastic piece returns 54.

Also, when the pipe 14 reaches the leading end face 52A of the elastic piece 52, the elastic piece 52 returns, the leading end face 52A of the elastic piece 52 contacts the outer perimeter surface of the pipe 14, the outer perimeter surface of the pipe 14 contacts the bearing part 56, and the pipe 14 is held between the elastic piece 52 and the bearing part 56.

Also, as illustrated in FIG. 5, when the pipe 16 is inserted into the clamp part 20, the elastic pieces 52 and 54 respectively are deformed and are pushed wide, and the pipe 16 becomes capable of advancing into the hollow part 50. When the pipe 16 is moved inside the hollow part 50 and the pipe 16 reaches the leading end face 54A of the elastic piece 54, the elastic piece 54 returns, the leading end face 54A of the elastic piece 54 contacts the outer perimeter surface of the pipe 16, and the outer perimeter surface of the pipe 16 contacts the bearing part 56.

At this time, the side face 52B of the elastic piece 52 contacts the outer perimeter surface of the pipe 14 while the elastic piece 52 is in a state being elastically deformed. Therefore, the pipe 16 is held inside by the leading end face 54A of the elastic piece 54, the side face 52B of the elastic piece 52, and the bearing part 56.

Here, the convex part 58 is placed protruding on the contact part 56B constituting the bearing part 56. Therefore, the pipe 14 or 16 is pressed outward (toward the side of the space 70) while causing the contact part 56B side to be elastically deformed by way of the convex part 58.

The pipe 14 is held between the leading end face 52A of the elastic piece 52 and the bearing part 56, and the pipe 16 is held inside by the leading end face 54A of the elastic piece 54, the side face 52B of the elastic piece 52, and the bearing part 56, but the pipe 14 or 16 is pressed toward the elastic piece 52 side (toward the direction of arrow A) by way of the convex part 56 by elastic energy (return force) accumulated by the elastic deformation of the contact part 56B.

Therefore, the holding force to hold the pipe 14 or 16 is increased compared with the case when the bearing part 56 does not use elastic energy, and shifting of the pipe 14 or 16 against a thrust force acting on the pipe 14 or 16 can be suppressed.

Also, because the pipe 14 or 16 is held at least between the elastic piece 52 and the bearing part 56, by providing the convex part 58 in a position opposite the leading end face 52A of the elastic piece 52, sandwiching the hollow part 50 in between, the holding force on the pipe 14 or 16 can be assuredly increased. Here, because it is sufficient as long as the holding force on the pipe 14 or 16 can be increased, the position of the convex part 58 is not limited to the contact part 56B side. For example, the convex part 58 may be provided on the contact part 56A side, or on the contact part 56A side and on the contact part 56B side.

It goes without saying that the present mode is only one working example, and suitable changes are possible within a scope not deviating from the gist of the present invention. For example, in the present embodiment, a clamp 10 configured with one clamp part 18 and two similar clamp parts 20 and 22 was described, but the arrangements and numbers of clamp parts 18 and clamp parts 20 and 22 are not particularly prescribed. Also, here, the bolted part 12 was provided on the lower wall 24 positioned between the reinforcing rib 48 and the reinforcing rib 64, but the position of the bolted part 12 is not limited to this.

## Claims

1. A clamp, comprising:
a bearing part adapted to be fixed on an installation-receiving member and adapted to contact a rod-form object;
a pair of wall parts provided on said bearing part and facing each other to form a hollow part for inserting said rod-form object;
an elastic piece extending from a leading end part of said wall part toward said bearing part for allowing said rod-form body to enter into said hollow part by elastic deformation, said elastic piece being adapted to hold said rod-form object in between with the bearing part; and
at least one convex part formed to protrude on said bearing part for contacting with said rod-form body.

2. The clamp according to claim 1, wherein said convex part is elastically deformable and is adapted to press said rod-form object in an elastically deformed state.

3. The clamp according to claim 1, wherein said convex part is formed on said bearing part, which is formed thinly by forming a hole part on an opposite side to the hollow part.

4. The clamp according to claim 1, wherein said convex part is provided in a position opposite to the leading end part of said elastic piece, sandwiching said hollow part in between.
